# DEMANDE DE BREVET EUROPEEN

(11) **EP 1 865 427 A1**
(43) Date de publication de la demande: **12.12.2007**
(21) Numéro de dépôt: 07108897.5
(22) Date de dépôt: 25.05.2007
(51) Int. Cl.: G06F 17/30

(54) **Procédé et système de sauvegarde en ligne**

(30) Priorité: 31.05.2006 FR 0604849
(71) Demandeur: FRANCE TELECOM, 75015 Paris (FR)
(72) Inventeur: Ouguerzi, Hicham, 14000, CAEN (FR); Brault, Sébastien, 14000, CAEN (FR); Laforge, Jérôme, 14370, ARGENCES (FR)
(74) Mandataire: Cabinet Plasseraud

(57) **Abrégé**

Un procédé et un système de sauvegarde en ligne pour applications WEB exécutées par un terminal utilisateur (UT) équipé d'un navigateur (Br) dans lesquels on intercepte (A) les flux émis et reçus par le terminal, on analyse (B) les réponses pour discriminer les liens (LHTMLₛ) portant sur des documents susceptibles d'être sauvegardés, on ajoute (C) sur tout lien discriminé un lien de sauvegarde en ligne (LSEL) et on soumet (D) à l'utilisateur le lien de sauvegarde en ligne pour sélection ou non sélection.

Application à la sauvegarde de documents pour application WEB de tout type.

## Description

L'invention concerne un procédé et un système de sauvegarde en ligne pour applications WEB.

A l'heure actuelle, beaucoup d'applications disponibles sur le WEB proposent le téléchargement de fichiers, documents de type WORD^{®} ou PDF par exemple.

Lorsque de tels documents sont mis à la disposition d'un internaute, ce dernier se contente d'en visualiser le contenu ou de les sauvegarder sur un espace de stockage local, tel que le disque d'un terminal connecté au réseau. En outre, il est possible de sauvegarder un fichier sur un disque réseau d'entreprise, pour autant que ce disque ait été installé auparavant dans le réseau d'entreprise.

Pour consulter à nouveau ces documents, cet utilisateur doit soit accéder à ces derniers en local, soit les télécharger de nouveau.

En particulier cet utilisateur est amené à gérer ces documents en stockant ces derniers sur un espace nomade, tel qu'une clé USB ou autre, afin de pouvoir retrouver et réutiliser ces documents sauvegardés dans le cas d'une activité et d'une utilisation nomade.

Il n'existe actuellement en pratique aucun espace banalisé permettant à un utilisateur de centraliser toutes ses données.

En effet, les solutions connues proposent un espace de stockage des données utilisant une interrelation forte entre les applications métier, le portail d'accès et les disques réseau.

La présente invention a pour objet la mise en oeuvre d'un espace de sauvegarde en ligne banalisé et optimisé, d'architecture modulaire, présentant une interrelation faible entre les différentes briques ou éléments constitutifs, une grande facilité d'intégration, la possibilité de partage de cet espace et de ce service de sauvegarde entre plusieurs applications.

En particulier, un autre objet de la présente invention est de permettre à un utilisateur réseau WEB de sauvegarder directement des fichiers disponibles en téléchargement dans un espace de sauvegarde propre à l'utilisateur situé sur le réseau, sans passer par l'intermédiaire d'une sauvegarde locale.

Réciproquement, un autre objet de la présente invention est également de permettre à cet utilisateur d'accéder à l'espace de sauvegarde précité au moyen de tout terminal réseau disponible.

Un autre objet de la présente invention est en outre, le cas échéant, de déléguer à une entité tierce telle qu'une entité de confiance, de façon totalement transparente, la gestion de ses données sauvegardées.

Un autre objet de la présente invention est également de fournir à chaque utilisateur un accès unique à l'ensemble de ses documents.

Un autre objet de la présente invention est également de fournir à chaque utilisateur un accès direct aux données sauvegardées, sans toutefois nécessiter de devoir passer par le site WEB d'origine de ces dernières.

Un autre objet de la présente invention est enfin, outre les objets précités, l'adjonction de services annexes de gestion de documents tels que, notamment, la restitution de copies, la gestion de versions successives des documents sauvegardés, la lutte antivirus informatiques, la notarisation des données enregistrées à partir de leur contenu et leur indexation à partir d'éléments remarquables tels que origine, date d'émission ou de publication de ces derniers.

Le procédé de sauvegarde en ligne pendant une navigation, objet de l'invention, est remarquable en ce que, pendant cette navigation, ce procédé consiste au moins à exécuter une étape d'interception des flux contenant des réponses à destination de ce terminal utilisateur, ces réponses contenant des liens, une étape d'analyse des réponses, pour discriminer au moins un lien portant sur au moins un fichier susceptible d'être sauvegardé, une étape de modification de la réponse par ajout d'un lien de sauvegarde en ligne relatif au lien discriminé, et, une étape d'envoi à l'utilisateur de la réponse modifiée pour sauvegarde délocalisée de ce fichier, en fonction de l'intérêt de cet utilisateur pour le ou les fichiers considérés.

Le procédé objet de l'invention permet à un utilisateur de sauvegarder directement des fichiers disponibles en téléchargement dans un espace documentaire délocalisé propre à l'utilisateur situé sur le réseau, sans passer par une copie locale ou dans le réseau d'entreprise.

En outre, selon un autre aspect, le procédé objet de l'invention est remarquable en ce que, préalablement à l'étape d'interception des flux, il comprend une étape d'authentification du terminal utilisateur, l'authentification réussie du terminal utilisateur permettant de délivrer un ticket d'authentification et de lancer l'interception et le traitement des flux et l'interception pour simple retransmission en l'absence de traitement des flux, sinon.

Le processus d'authentification permet d'exercer un contrôle d'accès efficace au service de sauvegarde en ligne pour applications WEB mettant en oeuvre le procédé objet de l'invention.

Selon un autre aspect remarquable du procédé objet de l'invention, le lien de sauvegarde en ligne contient au moins l'adresse URL du document à sauvegarder.

Il peut en outre comporter le ticket d'authentification, ce qui permet de sécuriser l'accès de toute requête auprès des entités permettant la mise en oeuvre du procédé objet de l'invention.

Le procédé objet de l'invention est remarquable en ce que, de manière non limitative, les flux comprenant des réponses sont des flux HTTP et les liens sont des liens HTML.

Selon un autre aspect remarquable du procédé objet de l'invention, l'étape consistant à analyser le corps HTML des réponses HTTP spécifiques comprend au moins la discrimination de l'entête respectivement du corps de chaque réponse HTTP, la discrimination d'une réponse autre qu'une déclaration d'erreur et la discrimination, dans le champ type de contenu de l'entête, d'un indice indiquant que la réponse est une page HTML.

Ceci permet de discriminer l'ensemble des réponses HTTP spécifiques à partir desquelles l'utilisateur pourra, le cas échéant, solliciter la sauvegarde d'un ou plusieurs documents contenus dans le corps HTML.

L'invention a en outre pour objet un système de sauvegarde en ligne pour application WEB exécutée par un terminal utilisateur équipé d'un navigateur WEB.

Ce système est remarquable en ce qu'il comporte au moins un moteur d'interposition placé en coupure entre le navigateur WEB et l'application WEB et permettant, d'une part, l'interception et la retransmission de toute requête émise par le navigateur WEB vers cette application WEB respectivement l'interrogation et la retransmission de toute réponse émise par cette application vers le navigateur WEB, et, d'autre part, l'analyse des réponses pour discriminer les liens portant sur les documents susceptibles d'être sauvegardés et l'ajout sur le lien discriminé d'un lien de sauvegarde en ligne inséré dans toute réponse retransmise vers le navigateur WEB et un serveur de sauvegarde en ligne recevant toute requête de sauvegarde en ligne émise, sur la base du lien de sauvegarde en ligne, inséré par le navigateur WEB, ce serveur de sauvegarde, sur émission d'une requête sur le document à sauvegarder vers cette application WEB et réception de ce document, permettant d'exécuter la sauvegarde de ce dernier.

L'invention a également pour objet un moteur d'interposition placé en coupure entre un navigateur WEB et une application WEB, ce module d'interposition comportant un module d'interception et de retransmission de toute requête émise par le navigateur WEB vers cette application respectivement d'interception et de retransmission de toute réponse émise par cette application WEB vers ce navigateur WEB.

Il est remarquable en ce qu'il comporte en outre un module d'analyse des réponses spécifiques, pour discriminer les liens portant sur des documents susceptibles d'être sauvegardés et un module de traitement de ces réponses spécifiques par apposition sur le lien discriminé d'un lien de sauvegarde en ligne inséré dans toute réponse spécifique retransmise vers ce navigateur WEB.

Dans un mode de mise en oeuvre préférentiel non limitatif le moteur d'interposition équipé du module d'analyse des réponses spécifiques et du module de traitement de ces réponses spécifiques par ajout sur le lien discriminé d'un lien de sauvegarde en ligne est implémenté dans un proxy, encore désigné serveur mandataire.

Le procédé et le système de sauvegarde en ligne, objets de l'invention, trouvent application à la sauvegarde de fichiers éditables contenus ou accessibles en ligne à partir de tout type d'applications WEB.

Ils seront mieux compris à la lecture de la description et à l'observation des dessins ci-après, dans lesquels :
- la figure 1a représente, à titre purement illustratif, un organigramme des étapes principales mises en oeuvre par le procédé de sauvegarde en ligne objet de la présente invention ;
- la figure 1b représente, à titre non limitatif, un organigramme d'une variante de mise en oeuvre du procédé objet de l'invention, par introduction d'une étape d'authentification du terminal utilisateur, préalable à l'étape d'interception de flux HTTP illustrée en figure 1a;
- la figure 1c représente, à titre illustratif, un détail de mise en oeuvre de l'étape d'analyse de réponse HTTP spécifique illustrée en figure 1a ;
- la figure 1d représente, à titre illustratif, un détail de mise en oeuvre de l'étape de discrimination dans l'entête d'un indice de document susceptible d'être sauvegardé, lorsque le corps de la réponse HTTP est compressé ;
- la figure 2a représente, à titre illustratif, le schéma synoptique d'un système de sauvegarde en ligne pour applications WEB conforme à l'objet de la présente invention ;
- la figure 2b représente à titre illustratif un diagramme spatiotemporel du protocole d'échange de messages entre les différents éléments constitutifs du système de sauvegarde en ligne objet de l'invention représenté en figure 2a.

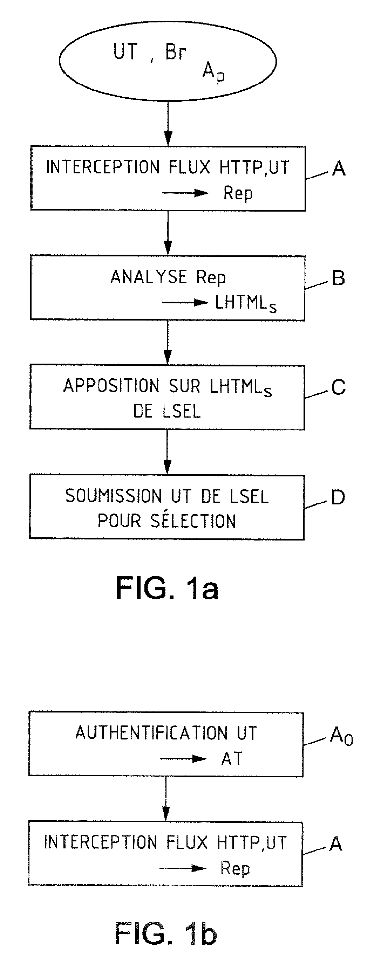

Une description plus détaillée du procédé de sauvegarde en ligne pour application WEB exécutée par un terminal utilisateur UT équipé d'un navigateur Br, l'application WEB étant notée Ap, sera maintenant donnée en liaison avec la figure 1a et les figures suivantes.

Le procédé de sauvegarde en ligne pour application WEB, objet de l'invention, est mis en oeuvre pendant tout processus de navigation exécuté par le navigateur Br du terminal utilisateur UT, utilisant par exemple de manière non limitative le protocole HTTP pour Hyper Text Transfer Protocol en anglais. Il sera décrit en conséquence à seul titre d'exemple dans le cas où les flux comprenant des réponses sont des flux HTTP et où les liens sont des liens HTML. Il peut être mis en oeuvre en utilisant un autre protocole et/ou un autre langage, le langage XML par exemple, à partir de tout terminal en permettant l'exécution, tel qu'un terminal WAP ou autre.

Il consiste au moins, ainsi que représenté en figure 1a, à intercepter en une étape A les flux HTTP émis et reçus par le terminal utilisateur UT. On indique que par flux HTTP émis et reçus par le terminal utilisateur, on comprend tous les flux de transmission de données comportant des requêtes HTTP, désignées ci-après Req, et des réponses HTTP, désignées ci-après Rep.

Suite à l'interception des flux HTTP précités, et en particulier à partir de réponses HTTP spécifiques contenues dans les flux HTTP reçus, le procédé objet de l'invention, ainsi que représenté en figure 1a, consiste à analyser à l'étape B le corps HTML des réponses spécifiques HTTP pour discriminer les liens HTML portant sur des documents ou des données susceptibles d'être sauvegardées.

Par l'exécution de l'étape B on comprend qu'on obtient les liens HTML précités, ces liens étant notés LHTMLₛ car ils désignent les liens portant sur les documents susceptibles d'être sauvegardés.

L'étape B est alors suivie d'une étape C consistant à ajouter, par apposition par exemple, sur tout lien HTML discriminé, c'est-à-dire sur les liens LHTMLₛ, un lien de sauvegarde en ligne noté LSEL.

L'étape C précitée est alors suivie d'une étape D consistant à soumettre à l'utilisateur, c'est-à-dire au terminal utilisateur UT, le lien de sauvegarde en ligne pour sélection ou non sélection en fonction de l'intérêt de cet utilisateur pour le ou les documents considérés.

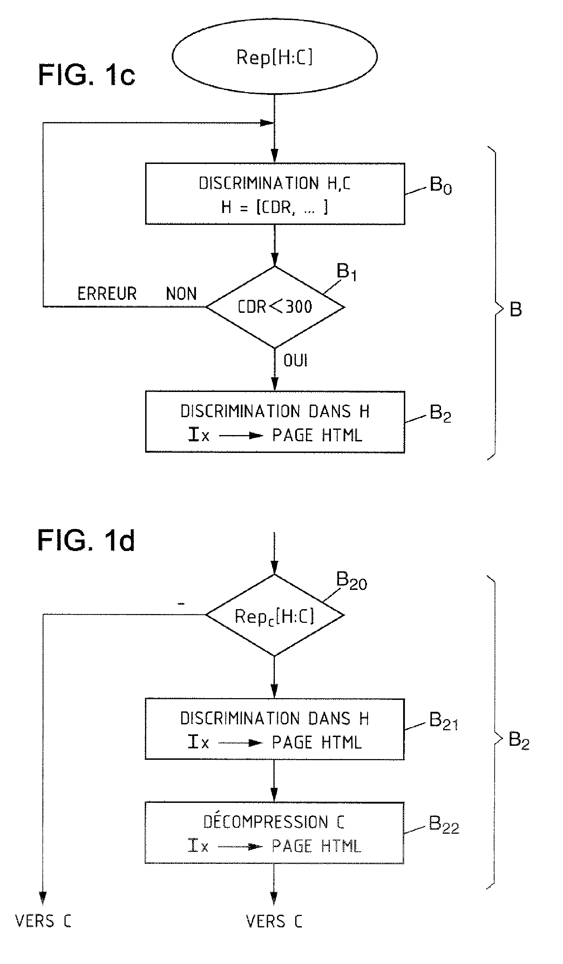

De préférence, en vue d'exercer un contrôle d'accès à un service de sauvegarde en ligne mettant en oeuvre le procédé de sauvegarde en ligne objet de la présente invention, on indique que, en référence à la figure 1 b préalablement à l'étape d'interception des flux HTTP, étape A de la figure 1a, le procédé peut comprendre avantageusement une étape A₀ d'authentification du terminal utilisateur UT.

Sur la figure 1b à l'étape A₀ d'authentification du terminal utilisateur, on comprend que l'authentification réussie du terminal utilisateur UT permet de délivrer un ticket ou certificat d'authentification noté AT, et de lancer l'interception et le traitement des flux HTTP et l'interception, pour simple transmission, en l'absence de traitement des flux HTTP sinon, c'est-à-dire lorsque l'authentification du terminal utilisateur UT n'est pas réussie.

On comprend ainsi que par la mise en oeuvre du procédé objet de la présente invention et en particulier du processus d'authentification tel que représenté en figure 1 B, ce dernier permet à la fois d'exercer le contrôle d'accès précité sur toute requête de sauvegarde en ligne mettant en oeuvre le procédé objet de la présente invention transmise par un terminal utilisateur UT autorisé, mais également de transmettre toute requête souhaitant atteindre la même application WEB indépendamment de la mise en oeuvre du procédé objet de l'invention, ce qui permet de conserver la compatibilité d'accès pour tout terminal utilisateur non habilité.

Bien entendu, le lien de sauvegarde en ligne LSEL contient au moins l'adresse URL du document à sauvegarder.

Le lien de sauvegarde en ligne LSEL peut contenir en outre le ticket d'authentification AT ainsi qu'il sera décrit ultérieurement dans la description.

On comprend, en particulier, que pour l'exécution de l'apposition sur le lien HTML discriminé LHTMLₛ du lien de sauvegarde en ligne LSEL, cette opération d'apposition peut être effectuée par concaténation ainsi qu'il sera décrit ultérieurement dans la description.

Enfin, l'étape C précitée est alors suivie de l'étape D de soumission au terminal utilisateur UT du lien de sauvegarde en ligne LSEL pour sélection, la sélection de ce lien de sauvegarde par l'utilisateur pouvant alors être avantageusement exécutée par un clic d'un témoin de pointage, tel qu'une souris ou autre sur le lien de sauvegarde en ligne affiché comme tel, sur l'écran du terminal utilisateur par exemple.

Une description plus détaillée de l'étape B consistant à analyser le corps HTML des réponses HTTP spécifiques sera maintenant donnée en liaison avec la figure 1c.

Pour la mise en oeuvre de l'étape B représentée en figure 1c, on considère toute réponse HTTP notée Rep, laquelle par définition est soumise à l'étape B de la figure 1a et 1c.

En référence à la figure 1 c précitée, l'étape B comprend au moins la discrimination en une étape B₀ de l'entête respectivement du corps de chaque réponse HTTP.

En référence à la figure 1c, on indique qu'une réponse HTTP est réputée comprendre une entête H et un corps C, la réponse étant alors notée :
Rep [H|C].

A partir de l'entête H et du corps C discriminés à l'étape B₀ de la figure 1c, le procédé objet de l'invention est alors suivi d'une étape B₁ de test de discrimination d'une réponse HTTP autre qu'une déclaration d'erreur. La discrimination peut être effectuée par détermination d'un code d'entête, un code d'entête supérieur à 300 désignant un message d'erreur et un code d'entête inférieur à 300 désignant une absence de message d'erreur.

Ainsi, sur réponse négative au test B₁ de la figure 1c, un message d'erreur étant reçu, un retour est effectué à l'étape B₀ pour discriminer l'entête H et le corps C de toute réponse HTTP ultérieure.

Au contraire sur réponse positive à l'étape de test B₁ de la figure 1c, en l'absence de message d'erreur, une étape B₂ est exécutée de discrimination dans le champ "type de contenu" de l'entête H d'un indice Iₓ indiquant que la réponse est une page HTML.

Suite à l'exécution des étapes B₀, B₁ et B₂ de la figure 1c, c'est-à-dire en définitive de l'étape B de la figure 1a, les étapes C et D sont alors exécutées pour la poursuite de la mise en oeuvre du procédé.

Enfin, le procédé objet de l'invention prend en compte l'existence de réponses HTTP compressées, ces réponses étant notées Rep_{c}.

Dans ce but, ainsi que représenté sur la figure 1d pour une réponse HTTP spécifique compressée, déterminée par un test B₂₀ à la figure 1d, l'étape consistant à analyser le corps HTML des réponses HTTP spécifiques comporte en outre avantageusement, suite à l'étape de discrimination proprement dite B₂₁, d'un indice Iₓ dans l'entête du champ type de contenu, une étape B₂₂ de décompression du corps HTML C. Une étape de recompression du corps HTML non représentée au dessin est exécutée pour effectuer la recompression du corps HTML C en vue de la retransmission de la réponse HTTP vers son destinataire.

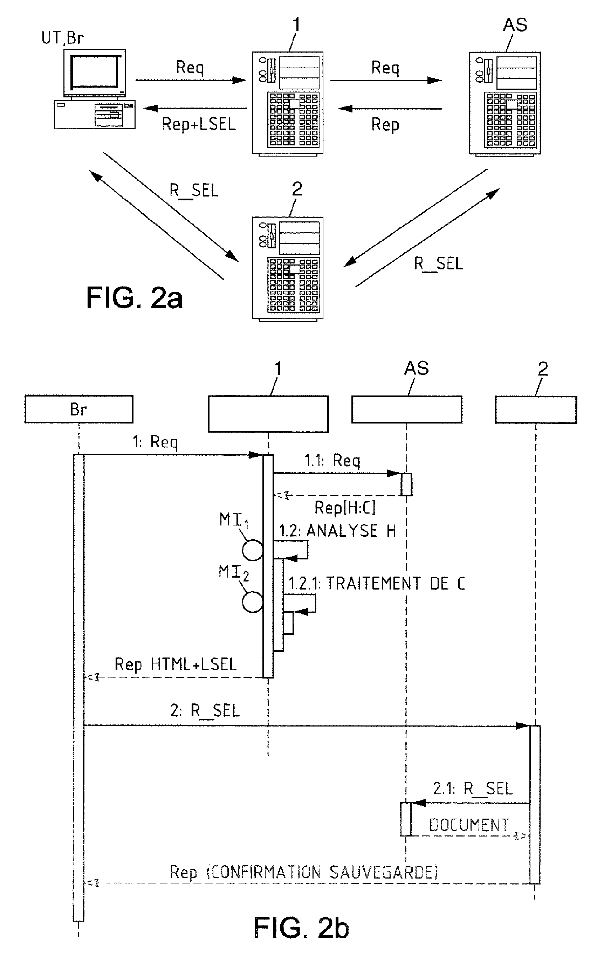

Une description plus détaillée d'un système de sauvegarde en ligne pour application WEB, conforme à l'objet de la présente invention, sera maintenant donnée en liaison avec la figure 2a et la figure 2b dans le cas non limitatif où les flux comprenant des réponses sont des flux HTTP et les liens des liens HTML.

Le système de sauvegarde en ligne pour applications WEB objet de l'invention représenté en figure 2a, comporte deux modules :
- un premier module 1 permet d'intercepter les requêtes d'un navigateur Br afin de leur appliquer un traitement. Ce traitement est réalisé dans un module d'interposition avec maintien de session par l'ajout automatique de lien HTML dans la réponse du serveur WEB, afin de mettre en évidence des fichiers disponibles en téléchargement ;
- un deuxième module 2 permet de gérer un espace disque réseau adressé par ce dernier pour stocker les fichiers.

De préférence, le module 1 est constitué par un proxy ou serveur mandataire auquel peuvent être ajoutés les différents modules de traitement.

Pour une description plus détaillée de l'architecture du module d'interposition, on pourra utilement se reporter à la demande de brevet français FR 04 01291 au nom du titulaire de la présente demande.

Le navigateur Br se connecte automatiquement et systématiquement au module 1, proxy d'interposition, afin d'initialiser une session de navigation. Le proxy enrichit la réponse avec les liens LSEL permettant de sauvegarder les fichiers disponibles en téléchargement dans l'espace de stockage réseau.

Le processus de sauvegarde en ligne se déroule en plusieurs phases :
1) L'utilisateur ou le terminal utilisateur UT est authentifié par un mécanisme quelconque auprès du mécanisme SEL. Cette authentification lui permet d'avoir un accès à son espace documentaire par un ticket d'authentification.
2) L'utilisateur navigue. Ses flux HTTP sont interceptés par le moteur d'interposition 1. Le moteur d'interposition 1 conserve une session utilisatrice basée sur des « cookies », pour fichiers de témoins, en anglais. Cette session contient le ticket d'authentification AT de l'utilisateur.
3) Sur des réponses Rep spécifiques bien discriminées tel que décrit précédemment en liaison avec la figure 1c, le moteur d'interposition 1 analyse le corps HTML C et y effectue le traitement décrit à l'étape C de la figure 1a.
4) Le traitement précité consiste à trouver les liens HTML pointant sur des fichiers susceptibles d'être sauvegardés, liens LHTMLₛ, puis d'y apposer un lien de sauvegarde en ligne LSEL. Les liens pointant sur des fichiers se terminent souvent par des extensions bien identifiées (.doc, .pdf...). Les liens de sauvegarde en ligne LSEL doivent contenir le ticket d'authentification AT de l'utilisateur et l'URL du fichier à enregistrer. Un exemple traitement, dit traitement SEL, sur un lien pointant sur un document WORD est donné au tableau T1 ci-après !

**Tableau T1**

| Réponse avant traitement SEL : |
|---|
| <a href = "/oceanie/doceanie.doc" > WORD </a> (2 MO) .<br> |

| Réponse après traitement SEL : |
|---|
| <a href="/oceanie/doceanie.doc"> WORD </a> (2 MO)<a href="http://sel.rd.francetelecom.fr/save/?url=http%3A%2F%2 Foceanie.rd.francetelecom.fr%2Foceanie%2Fdoceanie.doc&authe ntification=AYE6FVz5GmSzZ3- ">Sauvegarder le document</a> (2 MO .<br> |

Dans la réponse avant traitement, on observe que la chaîne "/oceanie/docianie.doc" pointe sur un document de type WORD pouvant être enregistré.
Dans la réponse après traitement SEL, le moteur d'interposition 1 a inséré le lien discriminé LHTMLₛ. Ce lien contient l'adresse URL encodée du document WORD et le ticket d'authentification AT de l'utilisateur.
5) L'utilisateur, s'il est intéressé par le document, clique sur le lien. Ceci déclenche sur le serveur de sauvegarde en ligne 2, l'enregistrement du document sur l'espace documentaire de l'utilisateur.
6) Une réponse est renvoyée au terminal utilisateur UT, elle contient la confirmation de la sauvegarde du document et le moyen d'y accéder.
7) L'utilisateur accède à ce document par son espace documentaire. Le protocole pouvant être utilisé est le protocole WEBDAV pour Web-based Distributed Authoring and Versioning, Extension du protocole HTTP 1.1 « RFC 2518-février 1999 ».

Une description des critères utilisés pour déclencher le traitement d'une réponse Rep est donnée ci-après, sachant qu'une réponse HTTP peut être découpée en deux parties :
- l'entête HTTP, H, est formé par des méta-données. Ces méta-données donnent des informations sur le statut de la réponse, par le code réponse HTTP, et le type de contenu du corps C de la réponse : page HTML, image, document pdf, word et autres. La méta-donnée décrivant le type de contenu du corps s'appelle le champ « Content-Type » de l'entête ;
- le corps de la réponse C : c'est la donnée ou document. Cette donnée contient la page HTML, image, document, pdf, word et autres.

Les critères nécessaires pour déclencher l'analyse d'une réponse HTTP par le processus de sauvegarde en ligne sont :
- le code réponse est inférieur à 300, test B1 de la figure 1c, c'est-à-dire que la réponse n'est pas une erreur ;
- le champ type de contenu « Content-Type » de l'entête indique que la réponse est une page HTML (égale à text/html).

Si la réponse Rep renvoyée par le serveur d'application WEB est compressée, alors ce serveur ajoute une méta-donnée dans l'entête de la réponse Rep pour indiquer que cette réponse est compressée. Le processus de sauvegarde en ligne doit alors décompresser la page, réaliser son traitement de sauvegarde en ligne puis compresser de nouveau cette page pour l'envoyer au terminal utilisateur UT.

Un diagramme séquentiel représenté en figure 2b montre comment une donnée est sauvegardée. Dans ce diagramme, ou prend comme condition initiale que l'utilisateur s'est authentifié auprès du mécanisme de Sauvegarde En Ligne (SEL).

La succession des messages échangés est la suivante :
1 Requête Req de la ressource serveur application WEB par le terminal utilisateur UT.
1.1 Routage de la requête HTTP Req vers le serveur hébergeant l'application WEB et réception de la réponse
1.2 L'entête H de la réponse est analysé par un module Ml₁. Les champs de l'entête traités sont le code de la réponse (inférieur à 300), et le champ de l'entête « Content-Type » (égal à text/html).
1.2.1 Dans le cas où les entêtes respectent les conditions précitées, le module de sauvegarde en ligne Ml₂ analyse le corps de la réponse pour y ajouter des liens LSEL à côté des liens pointant sur des fichiers pouvant être sauvegardés. Le lien LSEL doit contenir le ticket d'authentification et l'URL du fichier pouvant être sauvegardé.
2 L'utilisateur du terminal UT voit dans son navigateur Br la page WEB avec des liens supplémentaires à côté des fichiers pouvant être sauvegardés. Il décide de cliquer sur un des liens LSEL. Ceci engendre une requête R-SEL de sauvegarde en ligne sur le serveur de sauvegarde en ligne 2. Cette requête contient le ticket d'authentification AT et l'URL du fichier à sauvegarder.
2.1 Le serveur de sauvegarde en ligne 2 déclenche le téléchargement du document sur le serveur d'application WEB. Le serveur de sauvegarde en ligne sauvegarde ce fichier dans l'espace fichier de l'utilisateur compte tenu des informations contenues dans le ticket d'authentification AT contenu dans la requête R-SEL. Le serveur de sauvegarde en ligne 2 renvoie une réponse Rep contenant la confirmation de la sauvegarde et un accès à ce document.

Tous les traitements effectués coté client le sont dans un navigateur WEB.

Tous les traitements effectués coté serveur sont exécutés en langage JAVA^{®} dans un moteur J2EE^{®} pour Java2 Enterprise Edition. L'échange de messages / requêtes est effectué selon le protocole HTTP pour Hyper Text Transfer Protocol.

L'invention couvre en outre un programme d'ordinateur enregistré sur un support de mémorisation comportant une suite d'instructions pour exécution par un ordinateur ou par un dispositif dédié tel qu'un moteur d'interposition, sous forme d'un module logiciel Ml₁. Lors de cette exécution, ce programme exécute une analyse des réponses, en particulier du corps HTML de réponses spécifiques pour discriminer les liens tels que les liens HTML portant sur des fichiers susceptibles d'être sauvegardés selon le procédé tel que décrit en liaison avec les figures 1a et 1 d.

L'invention couvre enfin un programme d'ordinateur enregistré sur un support de mémorisation comportant une suite d'instructions pour exécution par un ordinateur ou par un dispositif dédié tel qu'un moteur d'interposition, sous forme d'un module logiciel Ml₂. Lors de cette exécution, ce programme exécute un traitement de réponses par ajout, par apposition par exemple sur le lien HTML discriminé LHTMLₛ d'un lien de sauvegarde en ligne LSEL inséré dans toute réponse telle qu'une réponse HTTP spécifique retransmise vers le navigateur WEB, selon le procédé ainsi que décrit en liaison avec les figures 1a et 1d.

## Revendications

1. Procédé de sauvegarde en ligne, pendant une navigation, **caractérisé en ce que**, pendant ladite navigation, ce procédé inclut au moins:
- une étape d'interception des flux comprenant des réponses à destination d'un terminal utilisateur, lesdites réponses comprenant des liens ;
- une étape d'analyse desdites réponses, pour discriminer au moins un lien portant sur au moins un fichier susceptible d'être sauvegardé ;
- une étape de modification de ladite réponse par ajout d'un lien de sauvegarde en ligne relatif audit au moins un lien discriminé ; et,
- une étape d'envoi au terminal utilisateur de ladite réponse modifiée pour sauvegarde délocalisée dudit au moins un fichier, en fonction de l'intérêt de l'utilisateur de ce terminal pour lesdits fichiers.

2. Procédé selon la revendication 1, **caractérisé en ce que**, préalablement à l'étape d'interception desdits flux, ledit procédé comprend une étape d'authentification du terminal utilisateur, l'authentification réussie dudit terminal utilisateur permettant de délivrer un ticket d'authentification et de lancer l'interception et le traitement des flux et l'interception pour simple retransmission en l'absence de traitement des flux, sinon.

3. Procédé selon l'une des revendications 1 ou 2, **caractérisé en ce que** les flux comprenant des réponses sont des flux HTTP et les liens sont des liens HTML.

4. Procédé selon l'une des revendications 1 à 3, **caractérisé en ce que** ledit lien de sauvegarde en ligne contient au moins l'adresse URL du fichier à sauvegarder.

5. Procédé selon l'une des revendications 2 à 4, **caractérisé en ce que** ledit lien de sauvegarde en ligne contient en outre ledit ticket d'authentification.

6. Procédé selon l'une des revendications précédentes, **caractérisé en ce qu'**il comporte en outre une étape de sélection par un utilisateur d'un lien de sauvegarde.

7. Procédé selon l'une des revendications 3 à 6, **caractérisé en ce que** l'étape d'analyse du corps HTML des réponses HTTP comprend au moins :
- une étape de discrimination d'un entête du corps de réponses HTTP ;
- une étape de discrimination d'une réponse HTTP autre qu'une déclaration d'erreur ; et,
- une étape de discrimination, dans un champ type de contenu de l'entête, d'un indice indiquant que la réponse est une page HTML.

8. Procédé selon la revendication 7, **caractérisé en ce que**, pour une réponse HTTP compressée, ladite étape d'analyse du corps HTML des réponses HTTP comporte en outre, préalablement à l'étape de discrimination d'un indice dans l'entête du champ type de contenu,
- une étape de décompression du corps HTML, et, suite à l'exécution de la discrimination des liens HTML portant sur les fichiers susceptibles d'être sauvegardés ;
- une étape de recompression du corps HTML.

9. Système de sauvegarde en ligne, **caractérisé en ce qu'**il comporte au moins :
- un moteur d'interposition placé en coupure entre un navigateur WEB et une application WEB, et permettant, d'une part, une interrogation et une retransmission des requêtes émises par ledit navigateur WEB vers ladite application WEB respectivement une interception et une retransmission des réponses émises par ladite application vers ledit navigateur WEB, et, d'autre part, une analyse des réponses pour discriminer des liens portant sur des fichiers susceptibles d'être sauvegardés et un ajout sur ledit lien discriminé d'un lien de sauvegarde en ligne inséré dans lesdits réponses retransmises vers ledit navigateur WEB ; et,
- un serveur de sauvegarde en ligne apte à recevoir une requête de sauvegarde en ligne émise, sur une base dudit lien de sauvegarde en ligne inséré, par ledit navigateur WEB, ledit serveur de sauvegarde, sur émission de ladite requête sur lesdits fichiers à sauvegarder vers ladite application WEB et réception dudit fichier permettant d'exécuter la sauvegarde dudit fichier.

10. Système selon la revendication 9, **caractérisé en ce que** les flux comprenant des réponses sont des flux HTTP et les liens sont des liens HTML.

11. Système selon la revendication 9 ou 10, **caractérisé en ce que** ladite requête de sauvegarde en ligne contient au moins l'adresse URL du document à sauvegarder.

12. Moteur d'interposition placé en coupure entre un navigateur WEB et une application WEB, ce moteur d'interposition comportant un module d'interception et de retransmission d'une requête émise par ledit navigateur WEB vers ladite application respectivement d'interception et de retransmission d'une réponse émise par ladite application WEB vers ledit navigateur WEB, **caractérisé en ce qu'**il comporte en outre :
- un module d'analyse des réponses, pour discriminer des liens portant sur des fichiers susceptibles d'être sauvegardés ; et,
- un module de traitement de ces réponses par ajout sur lesdits liens discriminés d'un lien de sauvegarde en ligne inséré dans ladite réponse retransmise vers ledit navigateur WEB.

13. Programme d'ordinateur enregistré sur un support de mémorisation comportant une suite d'instructions pour exécution par un ordinateur ou par un dispositif dédié tel qu'un moteur d'interposition, **caractérisé en ce que**, lors de cette exécution, ledit programme exécute une analyse des réponses, pour discriminer des liens portant sur des fichiers susceptibles d'être sauvegardés, conformément au procédé selon l'une des revendications 1 à 8.

14. Programme d'ordinateur selon la revendication 13, **caractérisé en ce que**, lors de cette exécution, ledit programme exécute un traitement des réponses par ajout, sur le lien discriminé, d'un lien de sauvegarde en ligne inséré dans ladite réponse retransmise vers ledit navigateur WEB.
